# EUROPÄISCHE PATENTSCHRIFT

(11) **EP 2 054 256 B1**
(45) Veröffentlichungstag und Bekanntmachung des Hinweises auf die Patenterteilung: **20.11.2013**
(21) Anmeldenummer: 07801649.0
(22) Anmeldetag: 14.08.2007
(51) Int. Cl.: B60K 35/00, B60K 37/06

(54) **ANZEIGEVORRICHTUNG FÜR EIN KRAFTFAHRZEUG**
DISPLAY DEVICE FOR A MOTOR VEHICLE
DISPOSITIF D'AFFICHAGE POUR UN VÉHICULE AUTOMOBILE

(30) Priorität: 14.08.2006 DE 102006038175
(43) Veröffentlichungstag der Anmeldung: 06.05.2009
(73) Patentinhaber: Johnson Controls GmbH, 51399 Burscheid (DE)
(72) Erfinder: LEIB, Steffen, 40885 Ratingen (DE); DEUBZER, Andreas, 51067 Köln (DE); DOLLE, Christophe, F-95520 Osny (FR); LEVENEZ, Cécile, F-78240 Chambourcy (FR); NEUMANN, Michael, Seddon, VIC 3011 (AU)
(74) Vertreter: Wolff, Felix
(86) Internationale Anmeldenummer: PCT/EP2007/007174
(87) Internationale Veröffentlichungsnummer: WO 2008/019821

(56) Entgegenhaltungen:
- WO-A-88/03663
- DE-A1- 19 702 957
- DE-A1- 19 910 240
- DE-A1- 19 941 956
- DE-U1- 8 222 120
- US-B1- 6 312 773

## Beschreibung

Die vorliegende Erfindung betrifft eine Anzeigevorrichtung für ein Kraftfahrzeug mit einer Anzeigefläche, wobei die Anzeigefläche einen Symbolbereich zur Darstellung fest vorgegebener Symbole aufweist.

Solche Anzeigevorrichtungen sind allgemein bekannt. Beispielsweise ist aus der deutschen Offenlegungsschrift DE 103 43 134 A1 eine Anzeigevorrichtung mit einem Symbolanzeigefeld bekannt, auf dem mehrere Symbole gleichzeitig oder nacheinander anzeigbar sind.

Nachteilig bei der bekannten Anzeigevorrichtung ist, dass eine vergleichsweise geringe Flexibilität der Anzeigevorrichtung mit Blick auf unterschiedliche anzuzeigende Informationsinhalte besteht.

Ein weiter wesentlicher Stand der Technik ist durch DE 197 02 957 A1 gegeben.

Es war daher die Aufgabe der vorliegenden Erfindung, eine Anzeigevorrichtung für ein Kraftfahrzeug zu schaffen, die eine flexible Anzeige von Informationselementen ermöglicht und dennoch einen einfachen und kostengünstigen Aufbau aufweist.

Diese Aufgabe wird durch eine Anzeigevorrichtung für ein Kraftfahrzeug mit einer Anzeigefläche gelöst, wobei die Anzeigefläche einen Symbolbereich zur Darstellung fest vorgegebener Symbole aufweist und wobei ferner die Anzeigefläche einen Matrixbereich zur Darstellung von variablen Anzeigeinhalten aufweist. Hierdurch ist es vorteilhaft möglich, dass eine flexibel einsetzbare Anzeigevorrichtung geschaffen wird, die eine Vielzahl von Informationselementen darzustellen in der Lage ist und dennoch einen kostengünstigen und robusten Aufbau aufweist.

Ferner ist es erfindungsgemäß Vorgesehen, dass die Anzeigevorrichtung eine über den Matrixbereich und den Symbolbereich sich erstreckende bedruckte Folie aufweist bzw. dass die Folie in dem außerhalb des Matrixbereichs liegenden Symbolbereich gemäß der Pixelrasterung des Matrixbereichs bedruckt ist., Durch das Vorsehen einer bedruckten Folie ist es möglich, ein Übersprechen zwischen verschiedenen Lichtbereichen zu vermeiden bzw. zu verringern. Weiterhin ist es dadurch vorteilhaft möglich, eine klare Abgrenzung zwischen dem Matrixbereich, dem Funktionsbeleuchtungsbereich, und dem Suchbeleuchtungsbereich zu erzielen. Ferner ist es durch eine Bedruckung der Folie gemäß der Pixelrasterung des Matrixbereichs in einem Bereich außerhalb des Matrixbereichs in vorteilhafter Weise möglich, dass (insbesondere im Verbund mit einer in diesem außerhalb des Matrixbereichs vorgesehenen gleichartigen bzw. die gleiche Wirkung erzielenden Hinterleuchtung wie im Matrixbereich) ein Benutzer einen größeren Matrixbereich bzw. eine größere Maxtrix-Anzeigeeinrichtung vermutet als es der Größe der im Matrixbereich angeordneten Matrix-Anzeigeeinrichtung tatsächlich entspricht. Hierdurch kann eine vergleichsweise kleine und kostengünstige Matrix-Anzeigeeinrichtung verwendet werden. Ferner ist es hierdurch insbesondere möglich, den Bereich der vermuteten Matrix-Anzeigeeinrichtung in besonderer Weise geformt zu gestalten, beispielsweise rund, oval oder in sonstiger Weise gekrümmt, wobei dennoch als tatsächlich verwendete Matrix-Anzeigeeinrichtung eine quadratische oder rechteckige Matrix-Anzeigeeinrichtung verwendet wird.

Weiterhin ist es bevorzugt, dass der Matrixbereich ein Flüssigkristallanzeigeelement aufweist. Hierdurch ist es möglich, mit bewährten Herstellungsmethoden eine kostengünstige und flexibel einzusetzende Anzeigeeinrichtung im Rahmen der erfindungsgemäßen Anzeigevorrichtung bereitzustellen. Weiterhin ist es dadurch möglich, die Größe der Anzeigevorrichtung vergleichsweise groß auszulegen und gleichzeitig lediglich eine vergleichsweise kleinen Matrixbereich zu benötigen.

Dadurch kann das im Matrixbereich zu verwendende flexible Anzeigeelement besonders kostengünstig ausgelegt werden.

Weiterhin ist es bevorzugt möglich, dass das Flüssigkristallanzeigeelement ein monochromes Flüssigkristallanzeigeelement zur Anzeige mit einer ersten Farbe ist. Hierdurch kann die erfindungsgemäße Anzeigevorrichtung besonders kostengünstig realisiert werden.

Erfindungsgemäß ist es weiterhin bevorzugt, dass der Symbolbereich zumindest teilweise zur Anzeige mit einer zweiten Farbe vorgesehen ist. Dies hat den Vorteil, dass die Anzeigevorrichtung insgesamt den Eindruck einer mehrfarbigen Anzeigevorrichtung erweckt, obwohl das Flüssigkristallanzeigeelement lediglich eine monochrome Anzeige ermöglicht und daher besonders kostengünstig darstellbar ist.

Erfindungsgemäß ist es weiterhin bevorzugt, dass der Symbolbereich wenigstens einen Suchbeleuchtungsbereich und einen Funktionsbeleuchtungsbereich aufweist. Hierdurch kann eine besonders komfortable Bedienung bzw. Informationsanzeige für einen Benutzer der Anzeigevorrichtung gewährleistet werden.

Erfindungsgemäß ist es weiterhin bevorzugt, dass die Anzeigevorrichtung eine Hinterleuchtungseinrichtung zur Hinterleuchtung sowohl des Matrixbereichs als auch des Symbolbereichs aufweist. Hierdurch kann in vorteilhafter Weise ein besonders kostengünstiger Aufbau der Anzeigevorrichtung realisiert werden.

Erfindungsgemäß ist es weiterhin bevorzugt, dass die Hinterteuchtungseinrichtung eine Mehrzahl von Lichtquellen aufweist, wobei eine erste Lichtquelle zur Hinterleuchtung des Matrixbereichs vorgesehen ist, wobei eine zweite Lichtquelle zur Hinterleuchtung des Funktionsbeleuchtungsbereichs vorgesehen ist und wobei eine dritte Lichtquelle zur Hinterleuchtung des Suchbeleuchtungsbereichs vorgesehen ist bzw. es ist bevorzugt, dass Anzeigevorrichtung eine Mehrzahl von optisch getrennten Lichtbereichen aufweist, wobei ein erster Lichtbereich zur Hinterleuchtung des Matrixb.ereichs vorgesehen ist, wobei ein zweiter Lichtbereich zur Hinterleuchtung des Funktionsbeleuchtungsbereichs vorgesehen ist und wobei ein dritter Lichtbereich zur Hinterleuchtung des Suchbeleuchtungsbereichs vorgesehen ist. Hierdurch kann in besonders einfacher Weise eine mehrfarbige Anzeigevorrichtung geschaffen werden, die besonders ansprechend gestaltet ist. Insbesondere ist es bevorzugt, wenn unterschiedliche Lichtquellen Licht in unterschiedlichen Farben aussenden. Dadurch kann in besonders einfacher Weise der Eindruck einer mehrfarbigen Anzeige erzielt werden.

Ausführungsbeispiele der Erfindung sind in den Zeichnungen dargestellt und in der nachfolgenden Beschreibung näher erläutert.
- **Figur 1**: zeigt eine schematische Darstellung eines Teils der Anzeigefläche einer erfindungsgemäßen Anzeigevorrichtung.
- **Figur 2**: zeigt schematisch eine Hinterleuchtungseinrichtung der erfindungsgemäßen Anzeigevorrichtung gemäß einer ersten Ausführungsform.
- **Figur 3**: zeigt schematisch eine Hinterleuchtungseinrichtung der erfindungsgemäßen Anzeigevorrichtung gemäß einer zweiten Ausführungsform.
- **Figur 4**: zeigt schematisch eine Hinterleuchtungseinrichtung der erfindungsgemäßen Anzeigevorrichtung gemäß einer dritten Ausführungsform.
- **Figuren 5 und 6**: zeigen in schematischer Weise die erfindungsgemäße Anzeigevorrichtung mit unterschiedlicher Farbverteilung.
- **Figur 7**: zeigt schematisch eine Ausführungsform des Aufbaus der erfindungsgemäßen Anzeigevorrichtung.

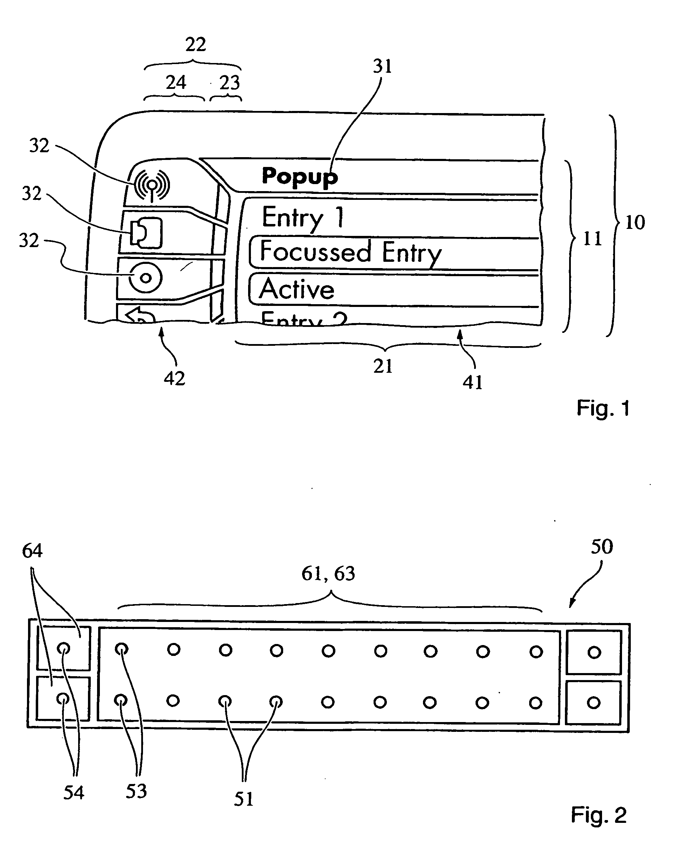

In **Figur 1** ist eine schematische Darstellung eines Teils einer Anzeigefläche 11 einer erfindungsgemäßen Anzeigevorrichtung 10 dargestellt. Der Anspruch an solche Anzeigevorrichtungen 10 ist, dass die Darstellung immer komplexerer Funktionen und Bilder ermöglicht werden soll, jedoch die Darstellung trotzdem einfach bleiben soll und die Anzeigevorrichtungen 10 kostengünstig herstellbar sein sollen. Diese Vorteile realisiert die erfindungsgemäßen Anzeigevorrichtung 10 dadurch, dass ein Matrixbereich 21 der Anzeigefläche 11 als ein vergleichsweise kleiner Teil der Anzeigevorrichtung 10 und damit auch der Anzeigefläche 11 mit einer variablen Anzeigeeinrichtung, insbesondere einem Flüssigkristallanzeigeelement 41, vorgesehen ist. Das Flüssigkristallanzeigeelement 41 ist beispielsweise in Form eines Passiv-Matrix-Anzeigeelements (passive matrix display) vorgesehen, insbesondere in Form eines monochromen Passiv-Matrix-Anzeigeelements, was besonders kostengünstig ist. Mit dem Flüssigkristallanzeigeelement 41 ist es erfindungsgemäß möglich, variable Anzeigeinhalte 31 darzustellen, wodurch die erfindungsgemäße Anzeigevorrichtung 10 besonders flexibel in ihrer Anzeige ist.

Die Anzeigefläche 11 weist ferner einen Symbolbereich 22 auf, der insbesondere eine Mehrzahl von Symbolen 32 darzustellen in der Lage ist. Die Symbole 32 werden beispielsweise mittels einer entlang der Konturen der Symbole 32 unterschiedlich lichtdurchlässigen Folie realisiert. Hierdurch kann die Darstellung der Symbole 32 besonders genau und optisch ansprechend gestaltet werden. Das hat weiterhin den Vorteil, dass eine besonders sichere Informationserkennung seitens des Benutzers möglich ist. Erfindungsgemäß ist es besonders bevorzugt, wenn der Symbolbereich 22 einen Suchbeleuchtungsbereich 24 und einen Funktionsbeleuchtungsbereich 23 aufweist. Hierbei kann der Funktionsbeleuchtungsbereich 23, beispielsweise als beleuchtete oder unbeleuchtete Fläche, dazu genutzt werden, den Zustand einer Gerätefunktion - beispielsweise "eingeschaltet" oder "ausgeschaltet" - anzuzeigen. Im Suchbeleuchtungsbereich 24 ist beispielsweise das eine Funktion darstellende Symbol 32 hinterleuchtet dargestellt.

In den **Figuren 2****,** **3 und 4** sind verschiedene Ausführungsbeispiele einer Hinterleuchtungseinrichtung 50 der Anzeigevorrichtung 10 schematisch dargestellt. Bei jeder dieser Ausführungsformen ist es so, dass eine Mehrzahl von Lichtquellen die verschiedenen Teile der Anzeigevorrichtung 10 bzw. der Anzeigefläche 11 beleuchten. Hierbei sind insbesondere erste Lichtquellen 51 (bevorzugt eine Mehrzahl von ersten Lichtquellen) zur Hinterleuchtung des Matrixbereichs 21 vorgesehen. Weiterhin sind zweite Lichtquellen 53 zur Hinterleuchtung des Funktionsbeleuchtungsbereichs 23 und dritte Lichtquellen 54 zur Hinterleuchtung des Suchbeleuchtungsbereichs 24 vorgesehen.

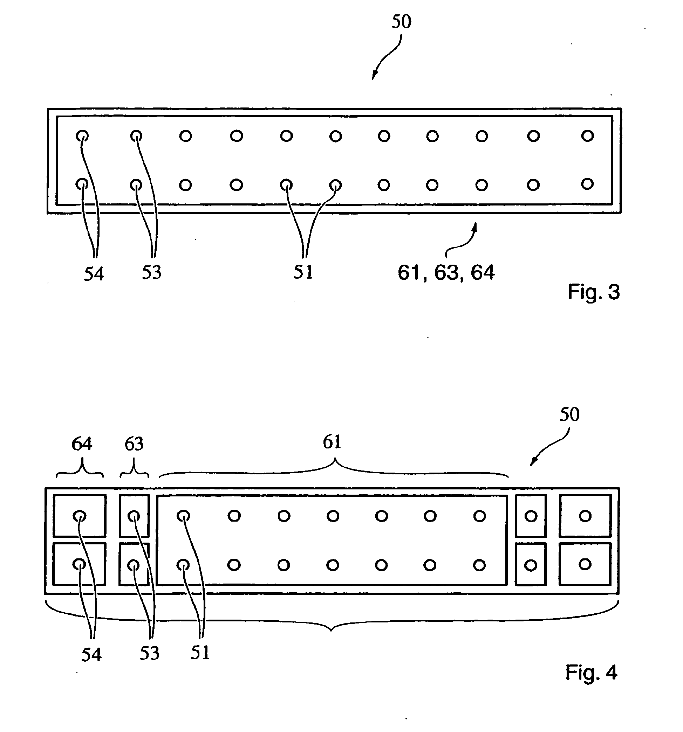

Weiterhin ist ein erster Lichtbereich 61 für den Matrixbereich 21 vorgesehen und es ist ein zweiter Lichtbereich 63 für den Funktionsbeleuchtungsbereich 23 vorgesehen. Ein dritter Lichtbereich 64 ist für den Suchbeleuchtungsbereich 24 vorgesehen. Erfindungsgemäß ist es so, dass die Lichtbereiche 61, 63, 64 beispielsweise als optisch voneinander getrennte sogenannte Lichthäuser ausgebildet sein können. Hierbei ist ein in den Figuren nicht eigens dargestelltes Gehäuse der Anzeigevorrichtung 10 ausgehend von den Lichtquellen 51, 53, 54 derart ausgebildet, dass eine optische Trennung zwischen den Lichtbereichen 61, 63, 64 erfolgt, beispielsweise durch mehr oder weniger lichtdurchlässige Trennmittel wie etwa Trennwände. Es kann jedoch erfindungsgemäß auch vorgesehen sein, dass beispielsweise zwei der Lichtbereiche 61, 63, 64 nicht voneinander getrennt vorgesehen sind. Hierzu sind in den Figuren 2, 3 und 4 verschiedene Beispiele angegeben. In der ersten Ausführungsform (Figur 2) ist der erste Lichtbereich 61 und der zweite Lichtbereich 63 gemeinsam und getrennt vom dritten Lichtbereich 64 vorgesehen. In der zweiten Ausführungsform (Figur 3) ist der erste, zweite und dritte Lichtbereich 61, 63, 64 gemeinsam (d.h. nicht getrennt voneinander) vorgesehen. In der dritten Ausführungsform (Figur 4) ist der erste, zweite und dritte Lichtbereich 61, 63, 64 getrennt voneinander vorgesehen.

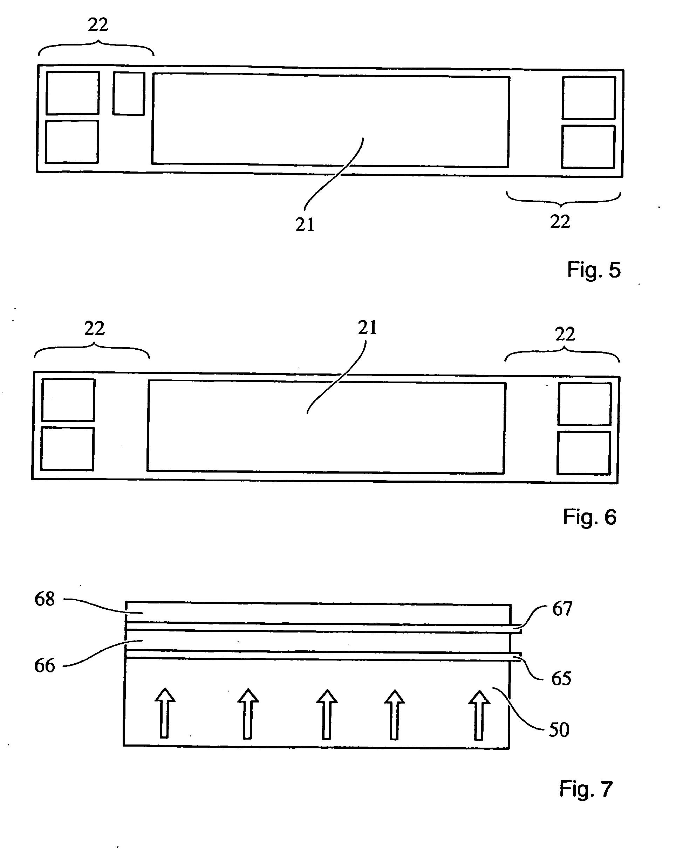

In den Figuren 5 und 6 sind beispielhaft verschiedene Beleuchtungsvarianten des Matrixbereichs 21 und des Symbolbereichs 22 dargestellt, die mit der erfindungsgemäßen Anzeigevorrichtung 10 möglich sind. Erkennbar ist, dass eine Mehrfarbigkeit der Anzeigevorrichtung 10 trotz eine monochromen Flüssigkristallanzeigeelements 41 im Matrixbereich 21 möglich ist.

In **Figur 7** ist eine schematische Darstellung einer Ausführungsform des Aufbaus der erfindungsgemäßen Anzeigevorrichtung 10 dargestellt. Die Anzeigevorrichtung 10 weist in Richtung von der Hinterleuchtungseinrichtung 50 zum Betrachter (in Figur 7 oben zu denken) einen Diffusor 65, ein Displayglas 66, eine bedruckte Folie 67 und ein Deckglas 68 auf. Aus der Betrachtung des Benutzers erscheint die auf dem Displayglas liegende bedruckte Folie 67 auf der gleichen Höhe wie das Displayglas an sich. Die bedruckte Folie 67 kann teilweise lichtdurchlässig und lichtundurchlässig ausgelegt werden. Die lichtundurchlässigen Teile der bedruckten Folie 67 können in allen Farben bedruckt werden. Dadurch können Funktionsblöcke (beispielsweise eine Anzahl von Symbole 32) auf der Anzeigevorrichtung 10 statisch (beispielsweise nach Funktionen) voreinander getrennt werden sowie die Farbgebung und das Design der Umgebung (beispielsweise dem Autoinnenraum, der Ausstattungsfarbe oder dergleichen) der Anzeigevorrichtung 10 angepasst werden. Hierdurch ist es vorteilhaft möglich, dass die Anzeigevorrichtung 10 mit sehr geringem Änderungsaufwand sehr variabel ist und über verschiedene Fahrzeuge bzw. Baureihen hinweg einsetzbar ist. Dies ist deshalb möglich, weil derselbe grundsätzliche Aufbau der Anzeigevorrichtung 10 mit verschiedenen bedruckten Folien 67 kombiniert werden kann, so dass letztlich mit geringem Änderungsaufwand Anzeigevorrichtungen 10 mit vergleichsweise großen Unterschieden in ihrer Anmutung realisierbar sind. In einer alternativen Ausführungsform der Anzeigevorrichtung 10 (nicht dargestellt) kann es auch vorgesehen sein, dass das Deckglas 68 nicht vorhanden ist und die bedruckte Folie 67 die äußere Oberfläche der Anzeigevorrichtung 10 bildet.

### Bezugszeichenliste

- 10: Anzeigevorrichtung
- 11: Anzeigefläche
- 21: Matrixbereich
- 22: Symbolbereich
- 23: Funktionsbeleuchtungsbereich
- 24: Suchbeleuchtungsbereich
- 31: variabler Anzeigeinhalt
- 32: Symbole
- 41: Flüssigkristallanzeigeelement
- 50: Hinterleuchtungseinrichtung
- 51: erste Lichtquelle
- 53: zweite Lichtquelle
- 54: dritte Lichtquellen
- 61: erster Lichtbereich
- 63: zweiter Lichtbereich
- 64: dritter Lichtbereich
- 65: Diffusor
- 66: Displayglas
- 67: bedruckte Folie
- 68: Deckglas

## Patentansprüche

1. Anzeigevorrichtung (10) für ein Kraftfahrzeug mit einer Anzeigefläche (11), wobei die Anzeigefläche (11) einen Symbolbereich (22) zur Darstellung fest vorgegebener Symbole (32) aufweist, wobei die Anzeigefläche (11) ferner einen Matrixbereich (21) zur Darstellung von variablen Anzeigeinhalten (31) aufweist, **dadurch gekennzeichnet, dass** die Anzeigevorrichtung (10) eine über den Matrixbereich (21) und den Symbolbereich (22) sich erstreckende bedruckte Folie (67) aufweist und dass die Folie (67) in dem außerhalb des Matrixbereichs (21) liegenden Symbolbereich (22) gemäß der Pixelrasterung des Matrixbereichs (21) bedruckt ist.

2. Anzeigevorrichtung (10) nach Anspruch 1, **dadurch gekennzeichnet, dass** der Matrixbereich (21) ein Flüssigkristallanzeigeelement (41) aufweist.

3. Anzeigevorrichtung (10) nach einem der vorhergehenden Ansprüche, **dadurch gekennzeichnet, dass** das Flüssigkristallanzeigeelement (41) ein monochromes Flüssigkristallanzeigeelement (41) zur Anzeige mit einer ersten Farbe ist.

4. Anzeigevorrichtung (10) nach einem der vorhergehenden Ansprüche, **dadurch gekennzeichnet, dass** der Symbolbereich (22) zur Anzeige mit einer zweiten Farbe vorgesehen ist.

5. Anzeigevorrichtung (10) nach einem der vorhergehenden Ansprüche, **dadurch gekennzeichnet, dass** der Symbolbereich (22) wenigstens einen Suchbeleuchtungsbereich (24) und einen Funktionsbeleuchtungsbereich (23) aufweist.

6. Anzeigevorrichtung (10) nach einem der vorhergehenden Ansprüche, **dadurch gekennzeichnet, dass** die Anzeigevorrichtung (10) eine Hinterleuchtungseinrichtung (50) zur Hinterleuchtung sowohl des Matrixbereichs (21) als auch des Symbolbereichs (22) aufweist.

7. Anzeigevorrichtung (10) nach einem der vorhergehenden Ansprüche, **dadurch gekennzeichnet, dass** die Hinterleuchtungseinrichtung (50) eine Mehrzahl von Lichtquellen (51, 53, 54) aufweist, wobei eine erste Lichtquelle (51) zur Hinterleuchtung des Matrixbereichs (21) vorgesehen ist, wobei eine zweite Lichtquelle (53) zur Hinterleuchtung des Funktionsbeleuchtungsbereichs (23) vorgesehen ist und wobei eine dritte Lichtquelle (54) zur Hinterleuchtung des Suchbeleuchtungsbereichs (24) vorgesehen ist, wobei insbesondere unterschiedliche Lichtquellen (51, 53, 54) Licht in unterschiedlichen Farben aussenden.

8. Anzeigevorrichtung (10) nach einem der vorhergehenden Ansprüche, **dadurch gekennzeichnet, dass** die Anzeigevorrichtung (10) eine Mehrzahl von optisch getrennten Lichtbereichen aufweist, wobei ein erster Lichtbereich (61) zur Hinterleuchtung des Matrixbereichs (21) vorgesehen ist, wobei ein zweiter Lichtbereich (63) zur Hinterleuchtung des Funktionsbeleuchtungsbereichs (23) vorgesehen ist und wobei ein dritter Lichtbereich (64) zur Hinterleuchtung des Suchbeleuchtungsbereichs (24) vorgesehen ist.

## Claims

1. Display device (10) for a motor vehicle having a display area (11), wherein the display area (11) has a symbol region (22) for representing fixedly predefined symbols (32), wherein the display area (11) furthermore has a matrix region (21) for representing variable display contents (31), **characterized in that** the display device (10) has a printed film (67) extending over the matrix region (21) and the symbol region (22), and **in that** the film (67) is printed in the symbol region (22), lying outside the matrix region (21), in accordance with the pixel rasterization of the matrix region (21).

2. Display device (10) according to Claim 1, **characterized in that** the matrix region (21) has a liquid crystal display element (41).

3. Display device (10) according to either of the preceding claims, **characterized in that** the liquid crystal display element (41) is a monochromatic liquid crystal display element (41) for displaying with a first colour.

4. Display device (10) according to any of the preceding claims, **characterized in that** the symbol region (22) is provided for displaying with a second colour.

5. Display device (10) according to any of the preceding claims, **characterized in that** the symbol region (22) has at least one search illumination region (24) and a function illumination region (23).

6. Display device (10) according to any of the preceding claims, **characterized in that** the display device (10) has a backlighting unit (50) for backlighting both the matrix region (21) and the symbol region (22).

7. Display device (10) according to any of the preceding claims, **characterized in that** the backlighting unit (50) has a plurality of light sources (51, 53, 54), wherein a first light source (51) is provided for backlighting the matrix region (21), wherein a second light source (53) is provided for backlighting the function illumination region (23), and wherein a third light source (54) is provided for backlighting the search illumination region (24), wherein in particular different light sources (51, 53, 54) emit light in different colours.

8. Display device (10) according to any of the preceding claims, **characterized in that** the display device (10) has a plurality of optically separated light regions, wherein a first light region (61) is provided for backlighting the matrix region (21), wherein a second light region (63) is provided for backlighting the function illumination region (23), and wherein a third light region (64) is provided for backlighting the search illumination region (24).

## Revendications

1. Dispositif d'affichage (10) pour un véhicule automobile doté d'une surface d'affichage (11), la surface d'affichage (11) comportant une zone de symbole (22) permettant de représenter des symboles (32) prédéfinis, la surface d'affichage (11) comportant en outre une zone matricielle (21) permettant de représenter des contenus d'affichage (31) variables, **caractérisé en ce que** le dispositif d'affichage (10) comporte un film (67) imprimé s'étendant au-dessus de la zone matricielle (21) et de la zone de symbole (22) et que le film (67) est imprimé dans la zone de symbole (22) située à l'extérieur de la zone matricielle (21) suivant la trame de pixels de la zone matricielle (21).

2. Dispositif d'affichage (10) selon la revendication 1, **caractérisé en ce que** la zone matricielle (21) comporte un élément d'affichage à cristaux liquides (41).

3. Dispositif d'affichage (10) selon l'une quelconque des revendications précédentes, **caractérisé en ce que** l'élément d'affichage à cristaux liquides (41) est un élément d'affichage à cristaux liquides (41) monochrome permettant de réaliser un affichage avec une première couleur.

4. Dispositif d'affichage (10) selon l'une quelconque des revendications précédentes, **caractérisé en ce que** la zone de symbole (22) est prévue pour réaliser un affichage avec une deuxième couleur.

5. Dispositif d'affichage (10) selon l'une quelconque des revendications précédentes, **caractérisé en ce que** la zone de symbole (22) comporte au moins une zone d'éclairage de courtoisie (24) et une zone d'éclairage fonctionnel (23).

6. Dispositif d'affichage (10) selon l'une quelconque des revendications précédentes, **caractérisé en ce que** le dispositif d'affichage (10) comporte un dispositif de rétroéclairage (50) servant au rétroéclairage tant de la zone matricielle (21) que de la zone de symbole (22).

7. Dispositif d'affichage (10) selon l'une quelconque des revendications précédentes, **caractérisé en ce que** le dispositif de rétroéclairage (50) comporte une pluralité de sources lumineuses (51, 53, 54), une première source lumineuse (51) étant prévue pour le rétroéclairage de la zone matricielle (21), une deuxième source lumineuse (53) étant prévue pour le rétroéclairage de la zone d'éclairage fonctionnel (23) et une troisième source lumineuse (54) étant prévue pour le rétroéclairage de la zone d'éclairage de courtoisie (24), les différentes sources lumineuses (51, 53, 54) envoyant notamment de la lumière de différentes couleurs.

8. Dispositif d'affichage (10) selon l'une quelconque des revendications précédentes, **caractérisé en ce que** le dispositif d'affichage (10) comporte une pluralité de zones lumineuses séparées sur le plan optique, une première zone lumineuse (61) étant prévue pour le rétroéclairage de la zone matricielle (21), une deuxième zone lumineuse (63) étant prévue pour le rétroéclairage de la zone d'éclairage fonctionnel (23) et une troisième zone lumineuse (64) étant prévue pour le rétroéclairage de la zone d'éclairage de courtoisie (24).
